# EUROPÄISCHE PATENTSCHRIFT

(11) **EP 1 160 111 B1**
(45) Veröffentlichungstag und Bekanntmachung des Hinweises auf die Patenterteilung: **14.06.2006**
(21) Anmeldenummer: 01107996.9
(22) Anmeldetag: 29.03.2001
(51) Int. Cl.: B60J 5/04

(54) **Kraftfahrzeugtür mit Fensterschachtverstärkung**
Vehicle door with window slit reinforcement
Portière avec renforcement de la fente de la vitre

(30) Priorität: 31.05.2000 DE 10027283
(43) Veröffentlichungstag der Anmeldung: 05.12.2001
(73) Patentinhaber: Dr.Ing. h.c.F. Porsche Aktiengesellschaft, 70435 Stuttgart (DE)
(72) Erfinder: Gerber, Harald, 74399 Wahlheim (DE)

(56) Entgegenhaltungen:
- DE-A- 19 540 187
- DE-A- 19 648 528
- US-A- 5 171 058
- PATENT ABSTRACTS OF JAPAN vol. 1995, no. 07, 31. August 1995 (1995-08-31) -& JP 07 101241 A (TOYOTA MOTOR CORP), 18. April 1995 (1995-04-18)

## Beschreibung

Die Erfindung bezieht sich auf eine Kraftfahrzeugtür mit einem unteren Türelement nach dem Oberbegriff des Anspruchs 1.

Aus der DE 197 28 546 A1 ist ein Rahmenkörper für eine Fahrzeugtür bekannt, der mehrteilig mit Verstärkungen ausgeführt ist. Desweiteren ist aus der DE 20 23 067 ein Türinnenblech bekannt, das sich bis zum Fensterschacht erstreckt. Aus der gattunsgemäßen DE 196 48 528 A ist eine Kraftfahrzeugtür mit einem unteren Türelement und einem Türrahmen bekannt, wobei dieser wenigstens ein in Höhe einer Fensterbrüstung verlaufendes etwa horizontal ausgerichtetes Rahmenteil aufweist. Das untere Türelement besteht aus einem einteiligen Tragrahmen und ist mit einem Türaußenblech und einem Trägerblech verbunden. Des Weiteren ist aus der JP-07101241 A eine Kraftfahrzeugtür bekannt, die am Türaußenblech eine äußere Türschachtverstärkung und am inneren Türrahmen eine weitere gegenüberliegende Türschachtversfärkung aufweist. Diese Türschachtverstärkung ist profiliert ausgeführt.

Aufgabe der Erfindung ist es, eine Kraftfahrzeugtür zu schaffen, die ein unteres Türelement zur Verstärkung eines Fensterschachtes aufweist, und einfach zu montieren ist.

Diese Aufgabe wird erfindungsgemäß durch die kennzeichnenden Merkmale des Anspruchs 1 gelöst. Weitere vorteilhafte Merkmale beinhalten die Unteransprüche.

Die mit der Erfindung hauptsächlich erzielten Vorteile bestehen darin, daß in das untere Türelement eine äußere Fensterschachtverstärkung integriert ist und hierzu keine zusätzlichen Profilverstärkungen erforderlich sind. Dies wird insbesondere dadurch erreicht, indem das untere Türelement aus einem rundherum profilierten einteiligen Tragrahmen mit seitlichen und einem oberen und einem unteren Tragrahmenprofil besteht. Dieses Türelement wird einerseits mit dem Türaußenblech und andererseits mit einem Trägerblech verbunden. Am oberen etwa horizontal ausgerichteten Tragrahmenprofil ist die äußere Fensterschachtverstärkung integriert, die einem als innere Fensterschachtverstärkung ausgebildeten Rahmenteil des Trägerbleches gegenübersteht.

Die äußere Fensterschachtverstärkung ist im mittleren labilen Bereich des oberen Tragrahmenprofils des unteren Türelements vorgesehen, so daß ein gleichbleibender Spalt zur Fensterführung gewährleistet ist, was noch durch die innere Fensterschachtverstärkung unterstützt wird.

Die Profilierungen der äußeren Fensterschachtverstärkung weisen eine relativ große Breite auf und durch die längsverlaufenden und im Querschnitt treppenartigen Profilierungen sowie der Abstützung am Türaußenblech wird die Stabilität der Kraftfahrzeugtür und gleichzeitig die des Fensterschachtes gegen ein Einknicken erhöht. Damit auch eine Steifigkeit der Verstärkung in Hochrichtung gewährleistet ist, sind in den längs verlaufenden Profilierungen mehrere hierzu quer verlaufende, d.h. in Hochrichtung verlaufende Eindrückungen vorgesehen, die sich durch die Profilierungen erstrecken.

Der Tragrahmen ist durch seine Einteiligkeit in einfacher Weise mit dem Türaußenblech sowie mit dem Trägerblech verbindbar, so daß eine Vormontage der Tür in vorteiliger Weise möglich wird.

Ein Ausführungsbeispiel der Erfindung ist in den Zeichnungen dargestellt und wird im Folgenden näher beschrieben.

Es zeigen:

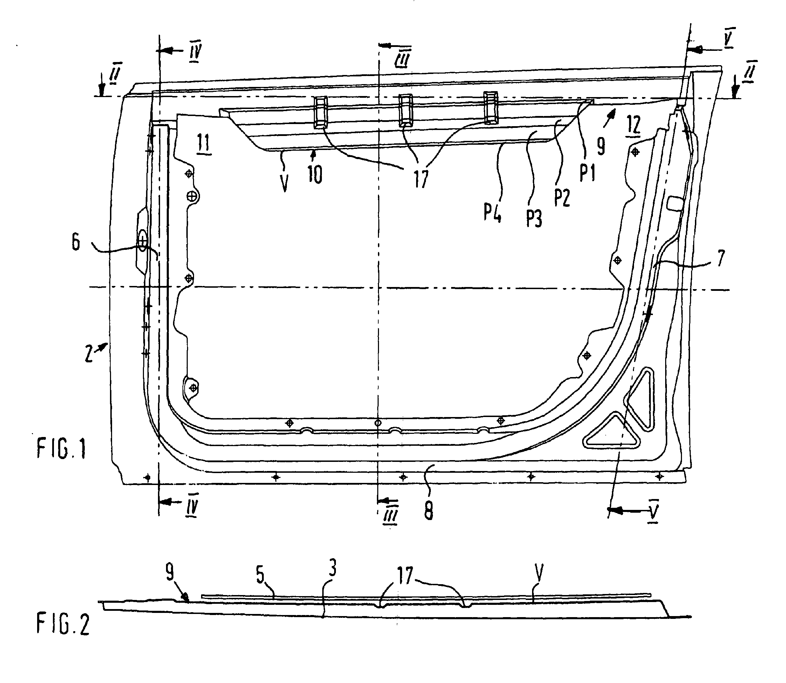

- Fig. 1: eine Ansicht auf ein unteres Türelement von außen auf eine Tür gesehen,
- Fig. 2: einen Schnitt durch die Tür nach der Linie II-II der Fig. 1,

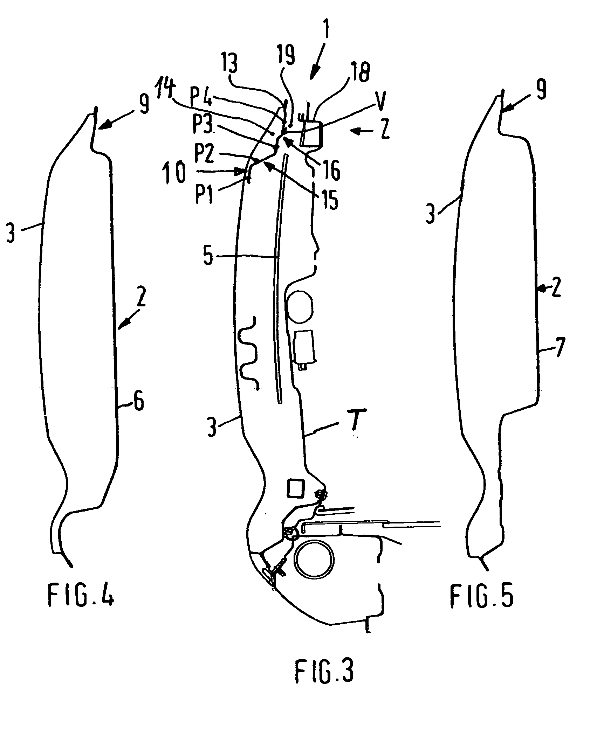

- Fig. 3: einen Schnitt durch die Tür gesehen nach der Linie III-III der Fig. 1,
- Fig. 4: einen Schnitt durch die Tür gesehen nach der Linie IV-IV der Fig. 1 und
- Fig. 5: einen Schnitt durch die Tür gesehen nach der Linie V-V der Fig. 1.

Eine Kraftfahrzeugtür 1 umfaßt im ein unteres einteiliges Türelement 2 und ein mit diesem verbundenes Türaußenblech 3, ein Trägerblech T sowie einen nicht dargestellten Türrahmen mit Fensterrahmen und Fensterhebevorrichtung für eine Scheibe 5.

Das untere Türelement 2 besteht im Wesentlichen aus einem rundherum einteiligen Tragrahmen mit seitlich profilierten Tragrahmenprofilen 6, 7 sowie einem unteren Tragrahmenprofil 8 und einem oberen als Fensterschachtverstärkung V ausgebildeten Tragrahmenprofil 9.

Die Fensterschachtverstärkung V ist in das untere Türelement 2 integriert und besteht aus einem im Querschnitt treppenartig ausgebildeten Profil mit mehreren Profilierungen P1 bis P4, das mit seinem unteren Schenkel 10 am Türaußenblech 3 anliegt. Diese Verstärkung V ist mittig des Türelements 2 bzw. des Tragrahmenprofils 9 angeordnet und weist zu den seitlichen Tragrahmenprofilen 6 und 7 jeweils einen Freischnitt 11 und 12 auf.

Zwischen dem unteren Schenkel 10 der Verstärkung V und seiner oberen Abschlußkante 13 ist zwischen dem Türaußenblech 3 und der Verstärkung V ein Hohlraum 14 vorgesehen.

Von dem unteren Schenkel 10 läuft die Verstärkung V über einen Schrägabschnitt 15 in einen etwa vertikalen Abschnitt 16 ein. In diesem vertikalen Abschnitt 16 sind quer zu den Profilierungen P1 bis P4 der Verstärkung V in Hochrichtung verlaufende Eindrückungen 17 vorgesehen.

Die Verstärkung 9 ist in Ansicht Z gesehen etwa trapezförmig ausgeführt und steht einem Profil 18 gegenüber, das mit dem Trägerblech T verbunden ist, so daß der Spalt 19 zwischen der Verstärkung V und dem Profil 18 für die Scheibe 5 innen und außen stabil ausgeführt ist.

## Patentansprüche

1. Kraftfahrzeugtür mit einem unteren Türelement (2), einem Trägerblech (T) und einem Türrahmen, wobei dieser wenigstens ein in Höhe einer Fensterbrüstung verlaufendes etwa horizontal ausgerichtetes Rahmenteil als innere Fensterschachtverstärkung (18) und einen unteren Rahmen aufweist, wobei der unterhalb der Fensterbrüstung liegende Bereich des Türrahmens mit einem Trägerblech (T) versehen ist, das mit dem Rahmenteil des Türrahmens verbunden ist, wobei das untere Türelement (2) aus einem rundherum profilierten einteiligen Tragrahmen mit seitlichen und einem oberen und unteren Tragrahmenprofil (6, 7, 8, 9) besteht, und der Tragrahmen einerseits mit einem Türaußenblech (3) und andererseits mit dem Trägerblech (T) verbunden ist und am oberen etwa horizontal ausgerichteten Tragrahmenprofil (9) des Tragrahmens eine äußere Fensterschachtverstärkung (V) integriert ist, die der inneren Fensterschachtverstärkung (18) des Trägerbleches (T) gegenübersteht, **dadurch gekennzeichnet, dass** die äußere Fensterschachtverstärkung (V) mittig des Tragrahmenprofils (9) angeordnet ist und zu den seitlichen Tragrahmenprofilen (6, 7) hin Freischnitte (11, 12) aufweist und mit im Querschnitt treppenartigen Profilierungen (P1 - P4) versehen ist und ein Schenkel (10) der Profilierung (P1) am Türaußenblech (3) anliegend ist und ein weiterer oberer Schenkel (13) der Profilierung (P4) von einem Falz des Türaußenbleches (3) umschlossen und ansonsten freiliegend unter Bildung eines Hohlraums (14) zum Türaußenblech (3) angeordnet ist.

2. Kraftfahrzeugtür nach den Ansprüchen 1, **dadurch gekennzeichnet, daß** in den treppenartigen Profilierungen (P1 - P4) der äußeren Fensterschachtverstärkung (V) mehrere zu den Profilierungen querverlaufende Eindrückungen (17) vorgesehen und die beabstandet zueinander angeordnet sind.

## Claims

1. A motor vehicle door comprising a lower door member (2), a supporting panel (T) and a door frame, wherein the door frame has at least one substantially horizontal frame part, extending at the level of a window sill and forming an inner window-channel reinforcement (18), and a lower frame, wherein the region of the door frame lying underneath the window sill is provided with a supporting panel (T) connected to the frame part of the door frame, wherein the lower door member (2) comprises a one-piece supporting frame which is profiled all round and has lateral and an upper and lower supporting-frame profile (6, 7, 8, 9), and the supporting frame is connected on one side to an outer door panel (3) and on the other side to the supporting panel (T), and an outer window-channel reinforcement (V) is integrated with the upper, substantially horizontally extending supporting-frame profile (9) of the supporting frame and lies opposite the inner window-channel reinforcement (18) of the supporting panel (T), **characterised in that** the outer window-channel reinforcement (V) is arranged in the middle of the supporting-frame profile (9) and has cutouts (11, 12) in the direction of the lateral supporting-frame profiles (6, 7) and is provided with profilings (P1 - P4) which are stepped in cross-section, and an arm (10) of the profiling (P1) rests against the outer door panel (3), and a further, upper arm (13) of the profiling (P4) is surrounded by a fold of the outer door panel (3) and is otherwise arranged freely so as to form a cavity (14) in the direction of the outer door panel (3).

2. A motor vehicle door according to claim 1, **characterised in that** a plurality of impressions (17), which extend transversely to the profilings and are arranged spaced apart, are provided in the stepped profilings (P1 - P4) of the outer window-channel reinforcement (V).

## Revendications

1. Portière de véhicule automobile avec un élément inférieur de portière (2), une tôle porteuse (T) et un cadre de portière, celui-ci comportant au moins un élément de cadre s'étendant approximativement à l'horizontale en tant que renfort intérieur de puits de fenêtre (18) à la hauteur d'un appui de fenêtre et un cadre inférieur, la zone du cadre de portière située sous l'appui de fenêtre étant munie d'une tôle porteuse (T) qui est reliée à l'élément de cadre du cadre de portière, l'élément inférieur de porte (2) étant constitué d'un cadre porteur monobloc profilé sur tout son pourtour avec des profilés latéraux, un profilé supérieur et un profilé inférieur de cadre porteur (6, 7, 8, 9) et le cadre porteur étant relié d'une part avec une tôle extérieure de portière (3) et d'autre part avec la tôle porteuse (T) et un renfort extérieur de puits de fenêtre (V) qui est opposé au renfort intérieur de puits de fenêtre (18) de la tôle porteuse (T) étant intégré dans le profilé de cadre porteur (9) orienté approximativement à l'horizontale du cadre porteur, **caractérisé en ce que** le renfort extérieur de puits de fenêtre (V) est disposé au centre du profilé de cadre porteur (9) et comporte des découpes libres (11, 12) en direction des profilés latéraux de cadre porteur (6, 7) et **en ce qu'**il est muni de profilages (P1 à P4) de section transversale échelonnée et **en ce qu'**une branche (10) du profilage (P1) s'appuie sur la tôle extérieure de portière (3) et une autre branche supérieure (13) du profilage (P4) est entourée par un pli de la tôle extérieure de portière (3) et est disposée librement par ailleurs, en formant une cavité vide (14) vers la tôle extérieure de portière (3).

2. Portière de véhicule automobile selon la revendication 1, **caractérisée en ce qu'**on a prévu plusieurs empreintes (17) s'étendant à la transversale des profilages, qui sont disposées à une distance mutuelle dans les profilages échelonnés (P1 à P4) du renfort extérieur de puits de fenêtre (V).
